# EUROPEAN PATENT SPECIFICATION

(11) **EP 0 473 971 B1**
(45) Date of publication and mention of the grant of the patent: **12.06.1996**
(21) Application number: 91113478.1
(22) Date of filing: 12.08.1991
(51) Int. Cl.: B23K 26/08

(54) **A device for supporting and moving a head for focusing a laser beam**
Eine Vorrichtung zum Tragen und Bewegen eines Kopfes für die Scharfeinstellung eines Laserstrahls
Un dispositif pour supporter et déplacer un tête pour la focalisation du rayon laser

(30) Priority: 23.08.1990 IT 6765290
(43) Date of publication of application: 11.03.1992
(73) Proprietor: COMAU S.p.A., I-10095 Grugliasco (Torino) (IT)
(72) Inventor: Marinoni, Giorgio, I-10143 Torino (IT); Maccagno, Alberto, I-10051 Avigliana (Torino) (IT)
(74) Representative: Bosotti, Luciano

(56) References cited:
- DE-A- 3 036 427
- US-A- 4 088 865

## Description

The present invention relates to a device for supporting and moving a head for focusing a laser beam, of the type indicated in the pre-characterising portion of claim 1.

A device of the type indicated above is disclosed in US-A-4 088 865.

In devices of the type indicated above, there is generally a problem when the focusing head has to be moved along a circular path so that it can perform operations such as the cutting of holes, the welding of tubes or annular elements, etc. If the focusing head has to follow a circular path of quite large diameter, this movement can be achieved by a corresponding movement of the robot carrying the focusing head. If the circular path to be followed by the focusing head is of fairly small diameter, for example of the order of 10-30 mm, however, the focusing head preferably has means for causing the axis of the focused laser beam to follow a circular path. For example, if the focusing head includes a focusing lens, this result can be achieved by means for moving the lens in such a way that its axis follows a circular path whilst remaining parallel to itself. In focusing-head supports which provide for the use of two or more mirrors for reflecting the laser beam in succession, this result could in theory be achieved by the rotation of the entire mirror-carrying structure. This is often impossible, however, since the structure of each mirror is quite complex and includes a cooling circuit with respective inlet and outlet pipes for the coolant which would become twisted around each other and obstruct or completely prevent the rotation which has to be imparted to the mirror assembly in order to achieve the desired operation.

The object of the present invention is to provide a device of the type indicated at the beginning which solves the problem specified above in a simple and effective manner.

In order to achieve this object, the subject of the invention is a device for supporting and moving a head for focusing a laser beam, having the characteristics indicated in claim 1.

By virtue of these characteristics, the system for moving the focusing head corresponds, in principle, to a connecting-rod-and-crank system in which the connecting rod is of variable length and is articulated about a fixed axis at its end opposite the crank. The focusing head can thus be made to perform circular operations without the need to rotate the entire system carrying the first and second mirrors but simply by the angular oscillation of the variable-length tube, with the advantage that problems resulting from any twisting of the pipes supplying the fluid for cooling the mirrors are prevented.

According to a further preferred characteristic of the invention, the first auxiliary support structure has means for adjusting the distance between the axis of the focusing head and the first axis between 0 and a predetermined maximum value so as to vary the diameter of the circular path followed by the focusing head.

Further characteristics and advantages of the present invention will become clear from the description which follows with reference to the appended drawings, provided purely by way of non-limiting example, in which:
Figure 1 is an elevational view of an industrial robot with a device according to the invention for supporting and moving a laser-beam focussing head,
Figure 2 is a perspective view of the detail II of Figure 1, on an enlarged scale,
Figure 3 is a partially-sectioned, schematic view of the detail II,
Figure 3a is a diagram illustrating the operating principle of the invention,
Figure 4 is a section of the detail IV of Figure 3 on an enlarged scale,
Figure 5 is a section taken on the line V-V of Figure 4,
Figure 6 is a section taken on the line VI-VI of Figure 3,
Figure 7 is a view of the detail VII of Figure 3, on an enlarged scale,
Figure 8 shows the detail VIII of Figure 3, on an enlarged scale, and
Figure 9 is a section taken on the line IX-IX of Figure 3.

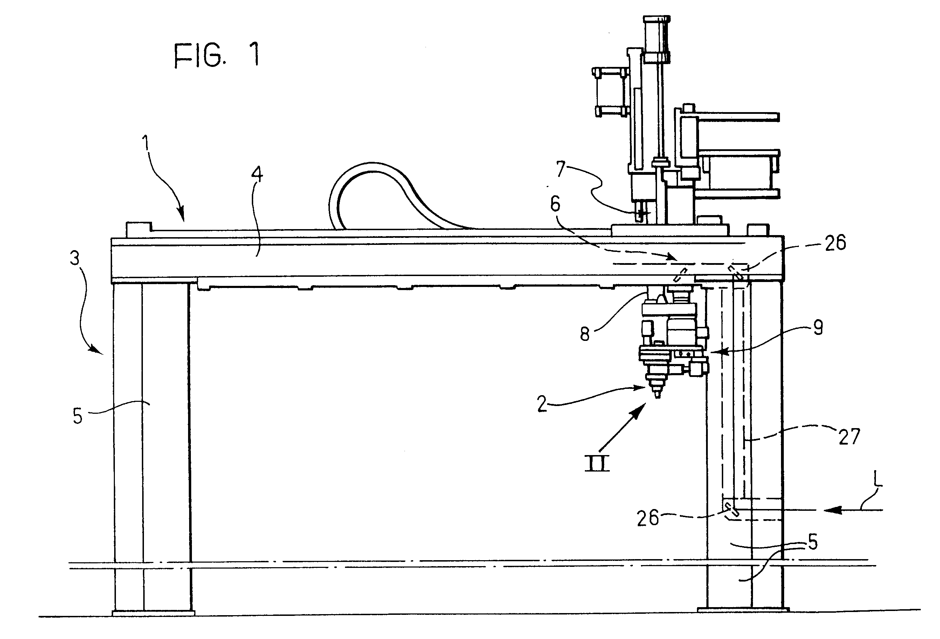

In Figure 1, an industrial robot, generally indicated 1, of the type known as a cartesian robot, has a laser-beam focusing head 2 which is movable in space along three mutually perpendicular axes. In the particular embodiment illustrated, the robot 1 includes a fixed structure 3 including two parallel and spaced-apart side members 4 (only one of which is visible in Figure 1) which connect the upper ends of two pairs of fixed pillars 5. The ends of a cross member 6 are slidable on the two side members 4 and, in known manner, a slide 7 is slidable on the cross member 6 longitudinally thereof. Also in known manner, the slide 7 in turn carries a vertically-slidable slide 8 whose lower end has an assembly 9 carrying the focusing head 2.

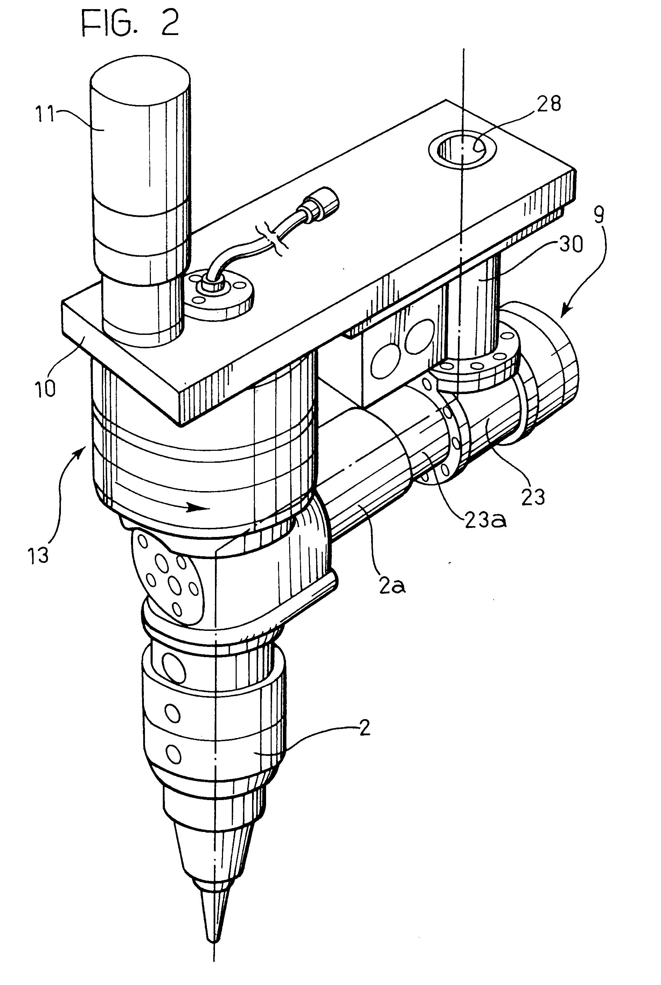

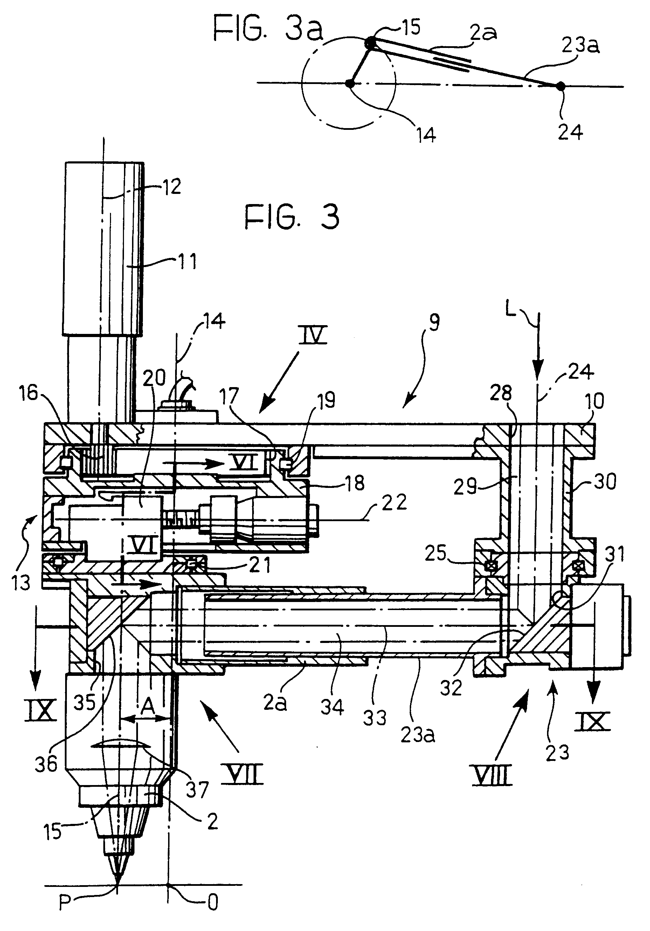

With reference to Figures 2 and 3, the assembly 9 includes a main support structure including a plate 10 to which an electric motor 11 with a vertical axis 12 is fixed. The body of the focusing head 2 is freely rotatable about its axis 15 on a first auxiliary support structure 13 which is rotatable on the main support structure 9 about an axis 14 parallel to and spaced by a distance A from the axis 15 of the focusing head. The auxiliary support structure 13 is rotated about the axis 14 by the electric motor 11 by means of a pinion 16 on the output shaft of the electric motor 11 which meshes with an internal ring gear 17 formed in a body 18 mounted on the plate 10 with the interposition of a rolling bearing 19 so that it can rotate about the axis of rotation 14. The body 18 carries a slide 20 which in turn supports the body of the focusing head 2 by means of a rolling bearing 21 so that the head can rotate freely about its own axis 15. The slide 20 can be moved relative to the body 18 along an axis 22, by means which will be described in detail below, to adjust the distance A between the axis of rotation 14 of the structure 13 and the axis 15 of the focusing head 2.

The assembly 9 also includes a second auxiliary support structure 23 which is freely rotatable on the main support structure 10, with the interposition of a rolling bearing 25, about an axis 24 parallel to and spaced from the axes 14 and 15.

With reference to Figure 1, the laser beam from a laser emitter arrives at the robot in the direction indicated by the arrow L in Figure 1. The laser beam is made to follow a predetermined path by a plurality of mirrors 26 arranged in a through-duct 27. Only some of the mirrors 26 are visible in Figure 1. These structural details are not illustrated in Figure 1 of the appended drawings since they do not fall within the scope of the present invention and are of known type. At the end of its path through the structure of the robot 1, the beam L reaches an inlet opening 28 (Figure 3) in the plate 10. Through the opening 28, the beam L enters a tube 29 defined by a tubular element 30 which is fixed to the plate 10 and supports the structure 23 for rotation about the axis 24 by means of the bearing 25. From the tube 29, the laser beam L reaches a cavity 31 in the structure 23 where there is a mirror 32 which reflects the laser beam in the direction of an axis 33 coplanar with and perpendicular to the axes 24 and 15. The body of the focusing head 2 and the auxiliary support structure 23 have respective tubular appendages 2a, 23a which are engaged for relative sliding along the axis 33 so as to define a tube 34 of variable length for the passage of the laser beam L. Passing through the tube 34, the laser beam L reaches the cavity 35 in the body of the focusing head 2 where a mirror 36 reflects the laser beam in the direction of the axis 15. Finally, the laser beam is focused at a point P by a lens 37 in the focusing head 2, shown only schematically in the drawing.

In operation, once the slide 20 has been adjusted so that the axis 15 of the focusing head 2 is the desired distance A from the axis 14, the motor 11 is operated to rotate the body 18 about the axis 14 by means of the pinion 16 and the ring gear 17. The body 18 also jotates the slide 20 about the axis 14 and this forces the body of the focusing head 2 to rotate about the axis 14. As a result of this rotation, the point P at which the laser beam is focused follows a circular path about the point 0 shown in Figure 3. The rotation of the laser head about the axis 14 is made possible by the variable-length arm 2a, 23a which oscillates about the axis 24 since the structure 23 is supported by the bearing 25 so as to be freely rotatable relative to the fixed structure 10. During this oscillation, the length of the arm 2a, 23a varies cyclically between a minimum value and a maximum value. In other words, the kinematic connection described above corresponds to a connecting-rod-and-crank connection in which the axis of rotation of the crank is the axis 14, the axis of articulation between the connecting rod and the crank is the axis 15 and the connecting rod is constituted by the variable-length arm 2a, 23a which is articulated at its end opposite the crank to the fixed structure 10 about a fixed axis 24. This kinematic system is illustrated for greater clarity in Figure 3a.

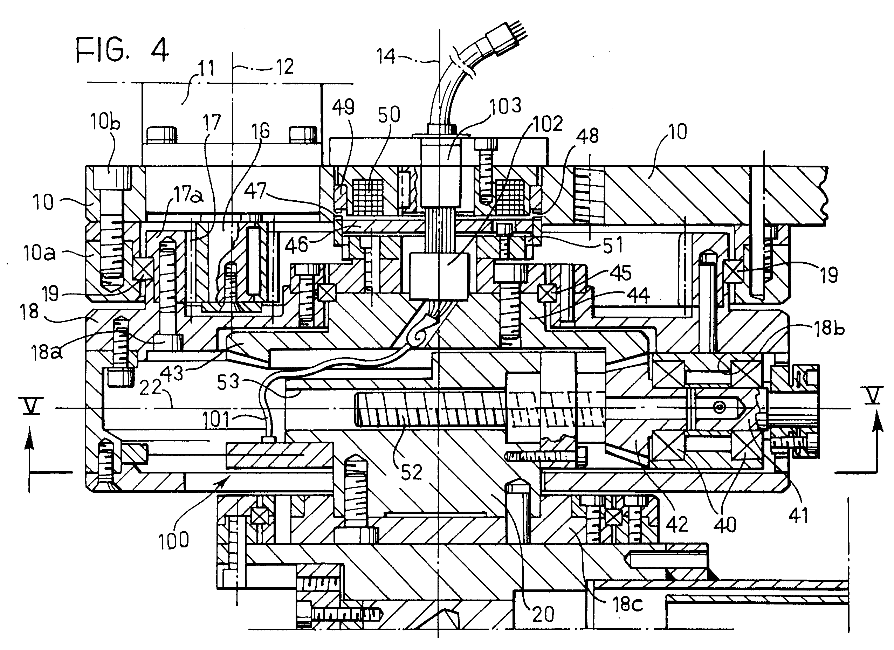

Figure 4 shows in detail the structure of a preferred embodiment of the assembly 9, with particular reference to the body 18 and the parts mounted thereon. As can be seen in Figure 4, the parts shown schematically in Figure 3 are actually constituted by various elements screwed together. For example, the ring gear 17 is constituted by an annular element 17a which is supported, by means of the bearing 19, by a ring 10a which is fixed to the plate 10 by screws 10b. The body 18 is screwed to the annular element 17a by screws 18a and has a radial cavity 18b in which rolling bearings 40 are mounted for supporting the shaft 41 of a bevel pinion 42 for rotation about the axis 22. The bevel pinion 42 meshes with a bevel gear 43 having a body 44 constituted by several elements joined together and supported by the body 18 for rotation about the axis 14 by means of a rolling bearing 45. A disc 46 connected to the body 44 of the bevel gear 43 has frontal teeth 47 for engaging corresponding frontal teeth 48 of an element 49 fixed to the plate 10. A solenoid 50 is arranged in the plate and, when energised, raises the disc 46 to cause the mutual engagement of the teeth 47, 48. The disc 46 is connected for rotation with the body 44 of the bevel gear 43 by a splined coupling 51 which enables the disc 46 to move vertically relative to the body of the gear 43. When the solenoid 50 is energised, the disc 46 moves upwardly and the teeth 47, 48 are meshed so that the gear 43 is prevented from rotating. When the solenoid 50 is de-energised, the disc 46 returns by gravity to its lowered position and the bevel gear 43 is free to rotate relative to the body 18 about the axis 14 by means of the bearing 45.

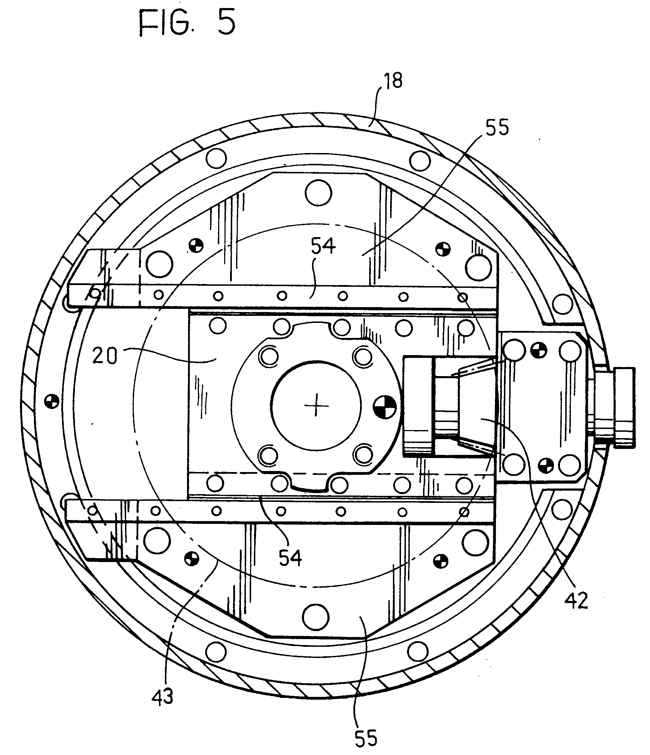

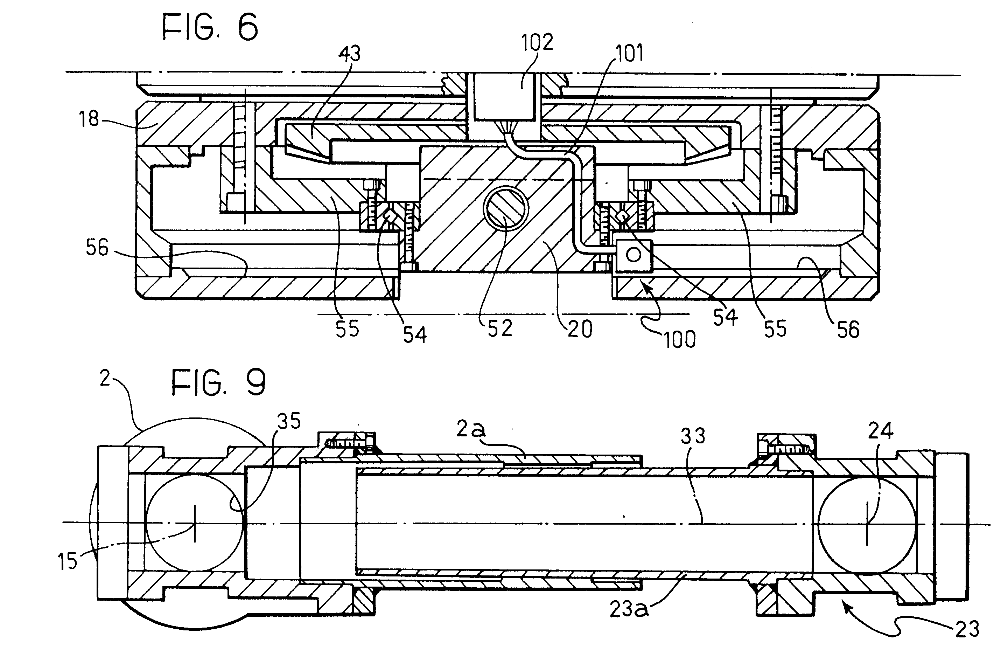

A screw 52 fixed coaxially to the shaft 41 of the bevel pinion 42 engages a threaded through-hole 53 in the slide 20. As can be seen in Figure 6, the slide 20 is guided for sliding in the body 18 along the axis 52 by two guides 54 with cylindrical rollers interposed between the sides of the slide 20 and two brackets 55 fixed to the body 18 in a cavity 56 thereof (see also Figure 5).

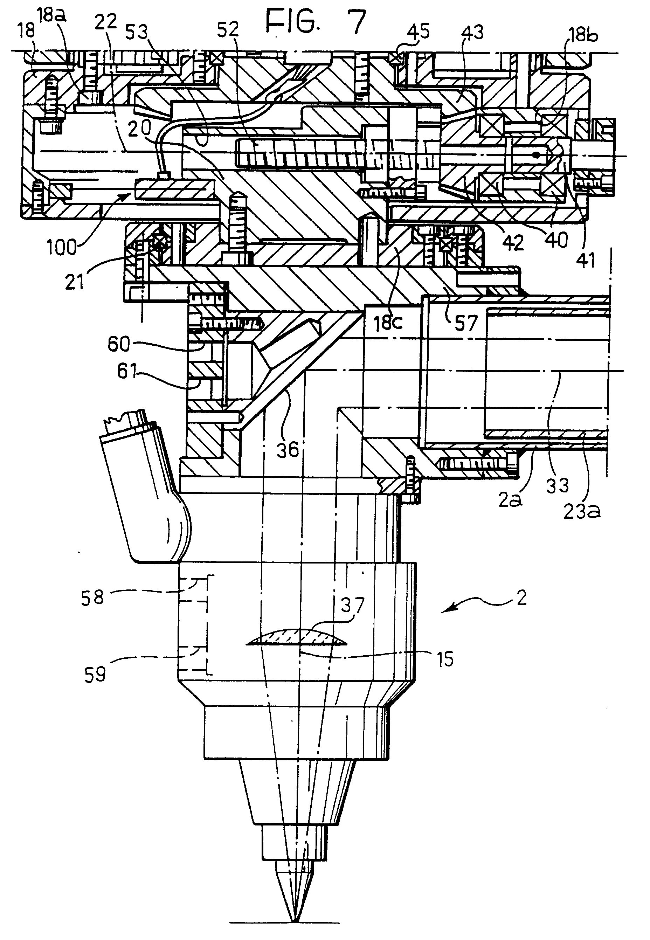

With reference to Figure 7, which shows the details of the body of the focusing head 2 and the way in which it is connected to the body 18, the body 18 has a lower disc 18c which supports a portion 57 of the body of the focusing head 2 containing the mirror 36 so that it can rotate freely, by means of the bearing 21. Figure 7 also shows schematically the focusing head 2 which has a known structure with openings 58 and 59 for admitting water and oxygen to the focusing head and inlet and outlet holes 60 and 61 for the fluid for cooling the mirror 36.

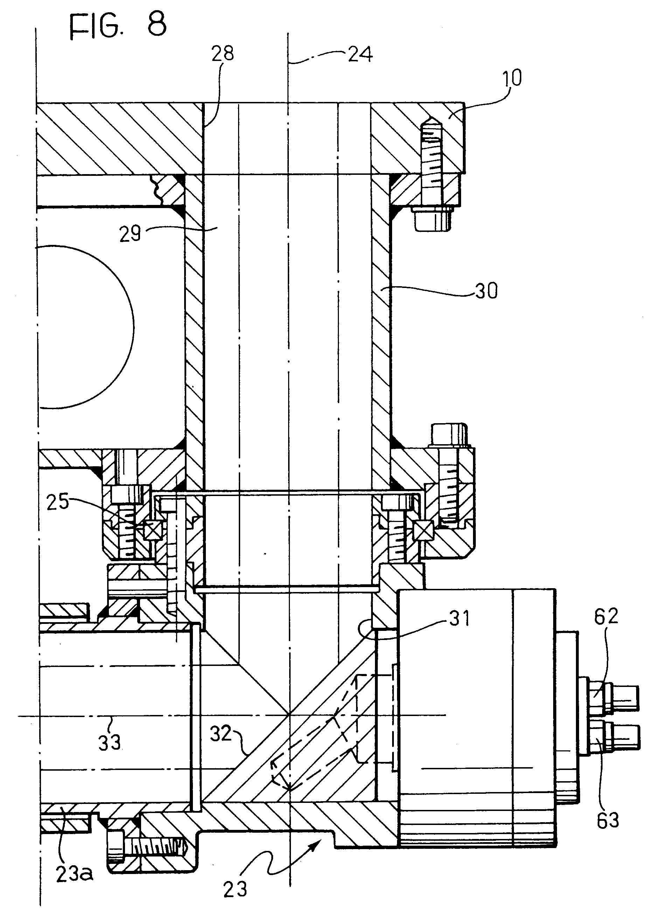

Figure 8 shows the structural details of the support structure 23, including inlet and outlet connectors 62 and 63 for the coolant fluid for the mirror 32.

Finally, Figure 9 shows the structural details of the variable-length arm 2a, 23a.

The device described above operates as follows:
Figure 4 shows the slide 20 in the position in which the axes 15, 14 are in alignment. In this condition, therefore, the distance A indicated in Figure 3 is zero. In order to move the slide 20 along the axis 22 to achieve a predetermined spacing A between the two axes 14, 15, the solenoid 50 is energised to raise the disc 46 and cause the mutual engagement of the frontal teeth 47, 48, consequently preventing the bevel gear 43 from rotating. At this point, the electric motor 11 is operated to rotate the pinion 16 and hence the ring gear 17. The ring gear 17 causes a corresponding rotation of the body 18 about the axis 14. As it rotates about the axis 14, the body 18 entrains the shaft 41 of the bevel pinion 42 which is thus forced to roll on the bevel gear 43 so as to rotate the screw 52. The rotation of the screw 52 results in a movement of the slide 20 along the axis 22. When the desired distance A between the two axes 14, 15 has been reached, the motor 11 is stopped and the solenoid 50 is de-energised. The disc 46 returns by gravity to its lowered position shown in Figure 4, in which the bevel gear 43 is free to rotate relative to the body 18 about the axis 14. A linear transducer 100 interposed between the slide 20 and the body 18 is adapted to emit an electrical signal indicative of the position of the slide 20 (Fig.4 ). The signal output by the transducer 100 is sent by a cable 101 to a rotary electrical distributor of known type having two parts 102, 103 movable relative to each other and fixed to the body 44 and to the plate 10 respectively.

If, at this point, it is desired to rotate the body of the focusing head 2 about the axis 14 so as to cause the point P at which the laser beam is focused to follow a circular path about the point 0, the electric motor 11 is operated. The motor rotates the body 18 about the axis 14 by means of the pinion 16 and the ring gear 17. As it rotates about that axis, the body 18 entrains the shaft 41 of the bevel pinion 42. In this condition, however, the bevel gear 43 which meshes with the bevel pinion 42 is free to rotate and the shaft 41 is therefore not rotated about its axis 22. As it rotates about the axis 14, the body 18 causes a corresponding rotation of the disc 18c on which the body of the focusing head 2 is freely rotatable. As already described with reference to Figure 3, the rotation of the focusing head 2 about the axis 14 is assisted by the variable-length arm 2a, 23a which oscillates about the axis 24, lengthening and shortening cyclically between longer and shorter conditions. By virtue of the kinematic mechanism described above, the rotary movement of the focusing head is achieved in a simple manner without causing any twisting of the pipes for supplying the cooling fluid to the mirrors or of the pipes for supplying oxygen and water to the focusing head.

## Claims

1. A device for supporting and moving a head for focusing a laser beam, having a hollow structure including a plurality of mirrors (32, 36) which reflect the laser beam (L) in succession so that it follows a predetermined path, the device comprising:
- a main support structure (10) having an inlet opening (28) for the laser beam (L),
- a first auxiliary support structure (13) rotatable on the main support structure (10) about a first axis (14),
- a laser focusing head (2) freely rotatable on the first auxiliary support structure (13) about a second axis (15) which is the focusing axis of the laser focusing head (2) and is parallel to and spaced from the first axis (14), the laser focusing head (2) having a cavity (35) for the passage of the laser beam (L), in which a first mirror (36) for reflecting the laser beam (L) is carried,
- motor means (11) for rotating the first auxiliary support structure (13) about the first axis (14), so as correspondingly to rotate the laser focusing head (2) about the first axis (14),
- a second auxiliary support structure (23) freely rotatable on the main support structure (10) about a third axis (24) which is parallel to the first (14) and the second axis (15), the second auxiliary support structure (23) having a cavity (31) for the passage of the laser beam (L), in which a second mirror (32) for reflecting the laser beam (L) is carried,
- in which the laser focusing head (2) includes a first hollow portion (2a), and the second auxiliary support structure (23) includes a second hollow portion (23a) being freely slidably mounted relative to the first hollow portion (2a) along a fourth axis (33) perpendicular to the second axis (15), so as to define a tube (34) of variable length for the passage of the laser beam (L),
characterised in that
- said third axis (24) is spaced from both the first axis (14) and the second axis (15),
- said fourth axis (33) is coplanar with both the second axis (15) and the third axis (24),
- thereby the laser beam (L) starting from the inlet opening (28) passes through the main support structure (10) and the second auxiliary support structure (23), is reflected from the direction defined by the third axis (24) in the direction of the fourth axis (33) by means of the second mirror (32), passes through the variable-length tube (34) and is reflected by means of the first mirror (36) along the direction of the second axis (15) through the laser focusing head (2) which is rotatable about the first axis (14).

2. A device according to claim 1, characterised in that the device includes means for adjusting the distance (A) between the first axis (14) and the axis (15) of the focusing head (2).

3. A device according to claim 2, characterised in that the means include a slide (20) which is slidable in the body (18) of the first auxiliary support structure (13) in a direction (22) perpendicular to the first axis (14), the slide (20) supporting the body of the focusing head (2) so that it can rotate freely about its own axis (15).

4. A device according to Claim 2, characterised in that the first auxiliary support structure (13) has drive means with a screw and a female thread (52, 53) for moving the slide (20).

5. A device according to Claim 4, characterised in that the device includes a single electric motor (11) which is adapted selectively to rotate the first auxiliary support structure (13) about the first axis (14) or to move the slide (20).

6. A device according to Claim 5, characterised in that the electric motor (11) is connected to the body (18) of the first auxiliary support structure (13) by a geared transmission, the body in turn supporting a bevel pinion (42) which can rotate freely about an axis (22) radial to the first axis (14), the radial axis coinciding with the axis of sliding of the slide (20), the bevel pinion (42) being connected to a screw (52) which engages a threaded hole (53) in the slide, the bevel pinion (42) also meshing with a bevel gear (43) supported by the body (18) of the first auxiliary support structure (13) for rotation about the first axis (14); the device also including an engagement device for preventing the bevel gear (43) from rotating relative to the main support structure (10).

7. A device according to Claim 6, characterised in that the engagement means comprise a first engagement element (46) connected for rotation with the bevel gear (43) and movable axially relative thereto between a lowered, disengaged position towards which it is biased by gravity and a raised, engagement position in which it engages a second engagement element (49) carried by the main support structure (10) so as to be prevented from rotating thereby.

8. A device according to Claim 7, characterised in that the two engagement elements (46, 49) have respective frontal teeth (47, 48).

9. A device according to Claim 1, characterised in that the mutually slidable portions (2a, 23a) are in the form of cylindrical tubular elements which can slide relative to each other.

10. A device according to Claim 3, characterised in that it has sensor means (100) for detecting the position of the slide (20).

## Patentansprüche

1. Vorrichtung, um einen Kopf zum Fokussieren eines Laser-Strahls zu tragen und zu bewegen, der einen hohlen Aufbau besitzt, der eine Vielzahl von Spiegeln (32, 36) aufweist, die den Laser-Strahl (L) der Reihe nach so reflektieren, daß dieser einer vorgegebenen Bahn folgt, wobei die Vorrichtung enthält:
einen Haupt-Tragaufbau (10), der eine Einlaßöffnung (28) für den Laser-Strahl (L) besitzt;
einen ersten Hilfs-Tragaufbau (13), der auf dem Haupt-Tragaufbau (10) um eine erste Achse (14) drehbar ist;
einen Laser-Fokussierkopf (2), der auf dem ersten Hilfs-Tragaufbau (13) um eine zweite Achse (15) drehbar ist, die die Fokussierachse des Laser-Fokussierkopfs (2) ist und zur ersten Achse (14) parallel liegt und von dieser beabstandet ist, wobei der Laser-Fokussierkopf (2) einen Hohlraum (35) für den Durchlaß des Laser-Strahls (L) besitzt, in dem ein erster Spiegel (36) angebracht ist, um den Laser-Strahl (L) zu reflektieren;
eine Motoreinrichtung (11), um den ersten Hilfs-Tragaufbau (13) um die erste Achse (14) zu drehen, um den Laser-Fokussierkopf (2) entsprechend um die erste Achse (14) zu drehen;
einen zweiten Hilfs-Tragaufbau (23), der auf dem Haupt-Tragaufbau (10) um eine dritte Achse (24) frei drehbar ist, die zur ersten (14) und zweiten Achse (15) parallel liegt, wobei der zweite Hilfs-Tragaufbau (23) einen Hohlraum (31) für den Durchlaß des Laser-Strahls (L) besitzt, in dem ein zweiter Spiegel (32) angebracht ist, um den Laser-Strahl (L) zu reflektieren;
wobei der Laser-Fokussierkopf (2) einen ersten hohlen Teil (2a) aufweist und der zweite Hilfs-Tragaufbau (23) einen zweiten hohlen Teil (23a) aufweist, der relativ zum ersten hohlen Teil (2a) längs einer vierten Achse (33) frei verschiebbar angebracht ist, die senkrecht zur zweiten Achse (15) liegt, um für den Durchlaß des Laser-Strahls (L) ein Rohr (34) mit variabler Länge zu bilden;
dadurch gekennzeichnet, daß
die dritte Achse (24) sowohl von der ersten Achse (14) als auch der zweiten Achse (15) beabstandet ist;
die vierte Achse (33) sowohl mit der zweiten Achse (15) als auch der dritten Achse (24) in derselben Ebene liegt;
wodurch der von der Einlaßöffnung (28) ausgehende Laser-Strahl (L) den Haupt-Tragaufbau (10) und den zweiten Hilfs-Tragaufbau (23) durchläuft, mit Hilfe des zweiten Spiegels (32) aus jener Richtung, die von der dritten Achse (24) festgelegt wird, in die Richtung der vierten Achse (33) reflektiert wird, das Rohr mit variabler Länge (34) durchläuft und vom ersten Spiegel (36) in Richtung der zweiten Achse (15) durch den Laser-Fokussierkopf (2) reflektiert wird, der um die erste Achse (14) drehbar ist.

2. Vorrichtung gemäß Anspruch 1, dadurch gekennzeichnet, daß die Vorrichtung eine Einrichtung aufweist, um den Abstand (A) zwischen der ersten Achse (14) und der Achse (15) des Fokussierkopfs (2) einzustellen.

3. Vorrichtung gemäß Anspruch 2, dadurch gekennzeichnet, daß die Einrichtung einen Schlitten (20) aufweist, der im Körper (18) des ersten Hilfs-Tragaufbaus (13) in eine Richtung (22) senkrecht zur ersten Achse (14) verschiebbar ist, wobei der Schlitten (20) den Körper des Fokussierkopfs (2) so trägt, daß er sich um seine eigene Achse (15) frei drehen kann.

4. Vorrichtung gemäß Anspruch 2, dadurch gekennzeichnet, daß der erste Hilfs-Tragaufbau (13) eine Antriebseinrichtung mit einer Spindel und einem Innengewinde (52, 53) besitzt, um den Schlitten (20) zu bewegen.

5. Vorrichtung gemäß Anspruch 4, dadurch gekennzeichnet, daß die Vorrichtung einen einzigen Elektromotor (11) aufweist, der so aufgebaut ist, um wahlweise den ersten Hilfs-Tragaufbau (13) um die erste Achse (14) zu drehen oder den Schlitten (20) zu bewegen.

6. Vorrichtung gemäß Anspruch 5, dadurch gekennzeichnet, daß der Elektromotor (11) mit dem Körper (18) des ersten Hilfs-Tragaufbaus (13) über eine Zahnradübersetzung verbunden ist, wobei der Körper seinerseits ein Kegelritzel (42) trägt, das sich um eine Achse (22) frei drehen kann, die radial zur ersten Achse (14) liegt, wobei die radiale Achse mit der Gleitachse des Schlittens (20) übereinstimmt, wobei das Kegelritzel (42) mit einer Spindel (52) verbunden ist, die in eine Gewindebohrung (53) im Schlitten eingreift, wobei das Kegelritzel (42) weiters mit einem Kegelzahnrad (43) in Eingriff steht, das vom Körper (18) des ersten Hilfs-Tragaufbaus (13) so getragen wird, daß es sich um die erste Achse (14) drehen kann; wobei die Vorrichtung weiters eine Eingreifeinrichtung aufweist, um das Kegelzahnrad (43) an einer Drehung relativ zum Haupt-Tragaufbau (10) zu hindern.

7. Vorrichtung gemäß Anspruch 6, dadurch gekennzeichnet, daß die Eingreifeinrichtung ein erstes Eingreifelement (46) enthält, das für eine Drehung mit dem Kegelzahnrad (43) verbunden und relativ dazu axial zwischen einer abgesenkten, ausgerasteten Stellung, in die es durch die Schwerkraft vorgespannt wird, und einer angehobenen, eingerasteten Stellung bewegbar ist, in der es in ein zweites Eingreifelement (49), das vom Haupt-Tragaufbau (10) getragen wird, so eingreift, daß es dadurch an einer Drehung gehindert wird.

8. Vorrichtung gemäß Anspruch 7, dadurch gekennzeichnet, daß die beiden Eingreifelemente (46, 49) entsprechende Stirnzähne (47, 48) besitzen.

9. Vorrichtung gemäß Anspruch 1, dadurch gekennzeichnet, daß die gegenseitig verschiebbaren Teile (2a, 23a) die Form von rohrartigen Elementen besitzen, die relativ zueinander verschiebbar sind.

10. Vorrichtung gemäß Anspruch 3, dadurch gekennzeichnet, daß die Vorrichtung eine Meßgebereinrichtung (100) besitzt, um die Lage des Schlittens (20) abzutasten.

## Revendications

1. Dispositif pour supporter et déplacer une tête pour la focalisation d'un faisceau laser, comportant une structure creuse comprenant plusieurs miroirs (32, 36) qui réfléchissent le faisceau laser (L) successivement de sorte qu'il suit une trajectoire prédéterminée, le dispositif comprenant :
- une structure de support principale (10) ayant un orifice d'entrée (28) pour le faisceau laser (L),
- une première structure de support auxiliaire (13) pouvant tourner sur la structure de support principale (10) autour d'un premier axe (14),
- une tête de focalisation (2) de faisceau laser pouvant tourner librement sur la première structure de support auxiliaire (13) autour d'un deuxième axe (15) qui est l'axe de focalisation de la tête de focalisation (2) de faisceau laser et qui est parallèle au, et séparé du, premier axe (14), la tête de focalisation (2) de faisceau laser ayant une cavité (35) pour le passage du faisceau laser (L), dans laquelle est porté un premier miroir (36) destiné a réfléchir le faisceau laser (L),
- des moyens formant moteur (11) pour mettre en rotation la première structure de support auxiliaire (13) autour du premier axe (14) afin de faire tourner de manière correspondante la tête de focalisation (2) de faisceau laser autour du premier axe (14),
- une deuxième structure de support auxiliaire (23) pouvant tourner librement sur la structure de support principale (10) autour d'un troisième axe (24) qui est parallèle au premier (14) et au deuxième axe (15), la deuxième structure de support auxiliaire (23) ayant une cavité (31) pour le passage du faisceau laser (L), dans laquelle est porté un deuxième miroir (32) destiné a réfléchir le faisceau laser (L),
- dans lequel la tête de focalisation (2) de faisceau laser comprend une première partie creuse (2a), et la deuxième structure de support auxiliaire (23) comprend une deuxième partie creuse (23a) qui est montée de façon à coulisser librement par rapport à la première partie creuse (2a) le long d'un quatrième axe (33) perpendiculaire au deuxième axe (15), afin de définir un tube (34) de longueur variable pour le passage du faisceau laser (L), caractérisé en ce que
- ledit troisième axe (24) est séparé à la fois du premier axe (14) et du deuxième axe (15),
- ledit quatrième axe (33) est coplanaire à la fois au deuxième axe (15) et au troisième axe (14),
- ce qui a pour effet que le faisceau laser (L), démarrant de l'orifice d'entrée (28), traverse la structure de support principale (10) et la deuxième structure de support auxiliaire (23), est réfléchi depuis la direction définie par le troisième axe (24) en direction du quatrième axe (33) au moyen du deuxième miroir (32), traverse le tube (34) de longueur variable, et est réfléchi au moyen du premier miroir (36) suivant la direction du deuxième axe (15) à travers la tête de focalisation (2) de faisceau laser, qui peut tourner autour du premier axe (14).

2. Dispositif selon la revendication 1, caractérisé en ce que le dispositif comprend des moyens pour régler la distance (A) entre le premier axe (14) et l'axe (15) de la tête de focalisation (2).

3. Dispositif selon la revendication 2, caractérisé en ce que les moyens comprennent une coulisse (20) qui peut coulisser dans le corps (18) de la première structure de support auxiliaire (13) dans une direction (22) perpendiculaire au premier axe (14), la coulisse (20) supportant le corps de la tête de focalisation (2) de sorte qu'elle peut tourner librement autour de son propre axe (15).

4. Dispositif selon la revendication 2, caractérisé en ce que la première structure de support auxiliaire (13) a des moyens d'entraînement comportant une vis et un filetage femelle (52, 53) pour déplacer la coulisse (20).

5. Dispositif selon la revendication 4, caractérisé en ce qu'il comprend un moteur électrique (11) unique, qui est apte, de manière sélective, à faire tourner la première structure de support auxiliaire (13) autour du premier axe (14), ou à déplacer la coulisse (20).

6. Dispositif selon la revendication 5, caractérisé en ce que le moteur électrique (11) est relié au corps (18) de la première structure de support auxiliaire (13) par une transmission à engrenage, le corps supportant à son tour un pignon conique (42) qui peut tourner librement autour d'un axe (22) radial au premier axe (14), l'axe radial coïncidant avec l'axe de glissement de la coulisse (20), le pignon conique (42) étant relié à une vis (52) qui est en prise avec un trou fileté (53) dans la coulisse, le pignon conique (42) engrènant aussi avec un engrenage conique (43) supporté par le corps (18) de la première structure de support auxiliaire (13) en vue d'une rotation autour du premier axe (14) ; le dispositif comprenant également un dispositif de prise pour empêcher l'engrenage conique (43) de tourner par rapport à la structure de support principale (10).

7. Dispositif selon la revendication 6, caractérisé en ce que les moyens de prise comprennent un premier élément de prise (46) relié de façon à tourner avec l'engrenage conique (43) et mobile axialement par rapport à lui entre une position abaissée, dégagée, vers laquelle il est poussé par gravité et une position élevée, de prise, dans laquelle il est en prise avec un deuxième élément de prise (49) porté par la structure de support principale (10), ce qui l'empêche ainsi de tourner.

8. Dispositif selon la revendication 7 caractérisé en ce que les deux éléments de prise (46, 49) ont des dents avant (47, 48) respectives.

9. Dispositif selon la revendication 1, caractérisé en ce que les parties (2a, 23a) pouvant mutuellement coulisser ont la forme d'éléments tubulaires cylindriques qui peuvent coulisser l'un par rapport à l'autre.

10. Dispositif selon la revendication 3, caractérisé en ce qu'il a des moyens de détection (100) pour détecter la position de la coulisse (20).
